# EUROPEAN PATENT APPLICATION

(11) **EP 4 287 482 A1**
(43) Date of publication of application: **06.12.2023**
(21) Application number: 22176498.8
(22) Date of filing: 31.05.2022
(51) Int. Cl.: H02M 3/335, B60L 53/20, B60L 55/00, H02J 7/00, H02J 7/02

(54) **POWER CONVERSION TOPOLOGY**

(71) Applicant: MAHLE International GmbH, 70376 Stuttgart (DE)
(72) Inventor: FIGURES, Emilio, 46022 Valencia (ES); GARCERA, Gabriel, 46015 Valencia (ES); ESMORIS BERTOA, Antón, 46010 Valencia (ES); JORDAN HERRERO, Donato, 46178 La Yesa (ES)
(74) Representative: BRP Renaud & Partner mbB Rechtsanwälte Patentanwälte Steuerberater

(57) **Abstract**

The invention relates to a power conversion topology (7) for charging a HV-battery (4) and/or a LV-battery (5) of an electric vehicle (1). The power conversion topology (7) comprises:
- a three-winding transformer (16) with a primary winding (16a), a secondary winding (16b), and a tertiary winding (16c);
- a GR-rectifier (9), a HV-rectifier (10) and a LV-rectifier (13).

## Description

The invention relates to a power conversion topology for charging an HV-battery and/or an LV-battery of an electric vehicle according to the generic term of claim 1.

An electric vehicle usually comprises an HV-battery (HV: high voltage) for supplying energy to a vehicle drive of the electric vehicle and an LV-battery (LV: low voltage) for supplying energy to other electrical consumers of the electric vehicle - for example the instrument panel and/or lamps. The HV-battery i.e. the HV-side of the electric vehicle must be electrically isolated from the LV-battery i.e. the LV-side of the electric vehicle. Charging of the HV-battery and the LV-battery can be done via a utility grid and charging of the LV-battery can also be done via the HV-battery. In addition, the utility grid can be supplied with stored energy from the HV-battery i.e. the HV-battery can be discharged into the utility grid. The above functions are implemented by a power conversion topology that electrically connects the utility grid, the HV-battery and the LV-battery accordingly.

To charge the HV-batteries from the utility grid, an OBC circuit (OBC: on-board charger) is implemented in the power conversion topology, usually consisting of a PFC converter (PFC: power factor corrector) and an isolated DC-DC converter. The LV-battery is charged from the HV-battery via an auxiliary DC-DC converter. The DC-DC converter thereby galvanically isolates the HV-side from the LV-side of the power conversion topology. The DC-DC converter and the DC-DC auxiliary converter increase the size and cost of the power conversion topology.

A power conversion topology is known, for example, from JP H0965509 A, US 2008316774 A, and WO 2011/141785 A.

It is therefore the object of the invention to provide an improved or at least alternative embodiment for a power conversion topology of the generic type in which the described disadvantages are overcome.

This object is solved according to the invention by the object of independent claim 1. Advantageous embodiments are the subject of the dependent claims.

A power conversion topology according to the invention is provided for charging an HV-battery and/or an LV-battery of an electric vehicle. The power conversion topology contains a three-winding transformer having a primary winding for connection to a utility grid, a secondary winding for connection to an HV-battery, and a tertiary winding for connection to an LV-battery. The power conversion topology further comprises a GR-rectifier connected upstream of the primary winding, an HV-rectifier connected downstream of the secondary winding, and an LV-rectifier connected downstream of the tertiary winding.

In the present invention, abbreviations "HV" for "high voltage" and "LV" for "low voltage" are used. An element of the power conversion topology marked with the abbreviation "HV" or "LV" is correspondingly associated with an HV-side of the power conversion topology i.e. a side associated with the HV-battery, or an LV-side of the power conversion topology i.e. a side associated with the LV-battery, respectively. Furthermore, the abbreviation "GR" is used for "utility grid". An element of the power conversion topology marked with the abbreviation "GR" is correspondingly associated with a GR-side of the power conversion topology i.e. a side associated with the utility grid. It is understood that all elements of the power conversion topology are designed and interconnected to perform the functions described below. The terms "upstream" and "downstream" refer to the direction of current from the utility grid to the primary winding on the GR-side, the direction of current from the secondary winding to the HV-battery on the HV-side, and the direction of current from the tertiary winding to the LV-battery on the LV-side.

In the power conversion topology according to the invention, the functions of the conventional OBC circuit and the conventional DC-DC auxiliary converter are implemented in the three-winding transformer. In this case, the LV-rectifier and the tertiary winding in conjunction with the secondary winding and the HV-rectifier replicate the conventional DC-DC auxiliary converter, so that the structure and thereby the cost of the power conversion topology according to the invention can be reduced and the power density can be increased. Furthermore, in the power conversion topology according to the invention, the RMS value of the LV-side current and the peak value of the LV-side current can be reduced.

In the power conversion topology, the primary winding, the secondary winding and the tertiary winding interact electromagnetically with each other. A number of turns of the primary winding, a number of turns of the secondary winding and a number of turns of the tertiary winding of the three-winding transformer can be matched to each other.

Advantageously, an LV-side circuit arranged between the LV-battery and the tertiary winding can be designed bidirectionally. Advantageously, the power conversion topology as a whole can also be bidirectional.

The GR-rectifier and/or the HV-rectifier may each be represented by a preferably active full bridge rectifier. The power conversion topology may have an auxiliary inductor and the auxiliary inductor may be connected downstream of the LV-rectifier. The auxiliary inductor forms a filter inductor in the power conversion topology, whereby an LV-output of the power conversion topology maps to a current source. Accordingly, the filter inductor can reduce the RMS value of the LV-side current. In addition, the auxiliary inductance also limits the peak value of the LV-side current.

The power conversion topology may further comprise a GR-capacitor connected upstream of the GR-rectifier. The power conversion topology may also comprise an HV-capacitor connected downstream of the HV-rectifier. The power conversion topology may also comprise an HV-filter connected downstream of the HV-rectifier and/or an LV-filter connected downstream of the LV-rectifier. The HV-filter and the LV-filter may be realized in a manner known to those skilled in the art.

The LV-rectifier of the power conversion topology may be represented by a full bridge rectifier. Alternatively, the LV-rectifier can be represented by a midpoint rectifier with a center tap. In this case, the tertiary winding of the three-winding transformer may be divided into two partial windings by the center tap. The partial windings of the three-winding transformer can be identical to each other. In addition, the midpoint rectifier can have two diodes and two active switches connected antiparallel to the diodes. Thus, an LV-side circuit arranged between the LV-battery and the tertiary winding may be bidirectional. Alternatively to the embodiments described above, the LV-rectifier may be represented by a synchronous rectifier. The synchronous rectifier may additionally comprise MOSFET components and active switches connected in antiparallel with the MOSFET components. Thus, an LV-side circuit arranged between the LV-battery and the tertiary winding may be bidirectional.

In the three-winding transformer, the first AC voltage can be applied to the primary winding and a first active power can be output; the second AC voltage can be applied to the secondary winding and a second active power can be output; and a third AC voltage can be applied to the tertiary winding and a third active power can be output. Then, the power conversion topology can be designed in such a way, that an energy flow of the three-winding transformer is controllable by a phase angle between the first AC voltage at the primary winding and the second AC voltage at the secondary winding and by a DC voltage provided by the utility grid. Advantageously, the HV-battery and the LV-battery can then be charged independently by adjusting the DC voltage and the phase angle. Provided that the respective active power is positive during supply and negative during output and the power losses are neglected, the sum of all active powers in the three-winding transformer can be zero. The DC voltage provided by the utility grid can be controllable by a PFC converter of the electric vehicle.

The power conversion topology can be operable in a CHARGE mode and/or in a DRIVE mode and/or in a V-TO-G mode. In the CHARGE mode, the power conversion topology is connected to the utility grid and the HV-battery and the LV-battery of the electric vehicle are charged by the utility grid via the power conversion topology. In the DRIVE mode, the power conversion topology is disconnected from the utility grid and the LV-battery of the electric vehicle is charged by the HV-battery of the electric vehicle via the power conversion topology. In the V-TO-G operation, the power conversion topology is connected to the utility grid and the utility grid draws a current from the HV-battery of the electric vehicle via the power conversion topology. The V-TO-G mode can be realized by the bidirectional design of the power conversion topology.

Further important features and advantages of the invention are apparent from the subclaims, from the drawings, and from the accompanying figure description based on the drawings.

It is understood that the above features and those to be explained below can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

It shows, each schematically
- Fig. 1: a simplified circuit diagram of an electric vehicle with a power conversion topology according to the invention;
- Fig. 2: a simplified circuit diagram of the power conversion topology according to the invention;
- Fig. 3: a circuit diagram of the power conversion topology according to the invention;
- Fig. 4: a view of energy flows in the power conversion topology according to the invention;
- Fig. 5: a curve of active power output on the LV-side as a function of a phase angle;
- Fig. 6: a curve of active power as a function of the phase angle.

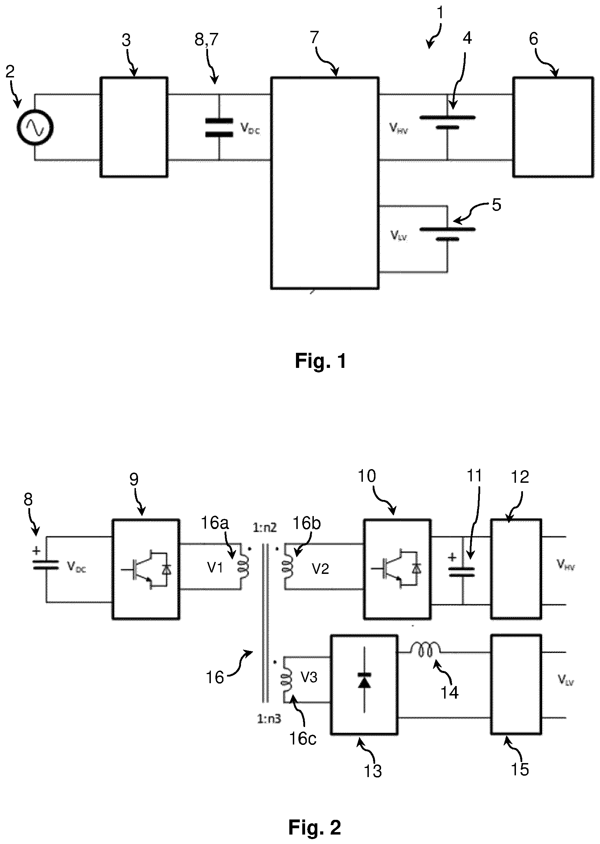

Fig. 1 shows a simplified circuit diagram of an electric vehicle 1 connected to a utility grid 2. The utility grid 2 is understandably not part of the electric vehicle 1. The electric vehicle 1 contains a PFC converter 3, an HV-battery 4 and an LV-battery 5. Furthermore, a traction inverter 6 of the electric vehicle 1 is connected downstream of the HV-battery 4. In addition, the electric vehicle 1 comprises a power conversion topology 7 according to the invention with a GR-capacitor 8.

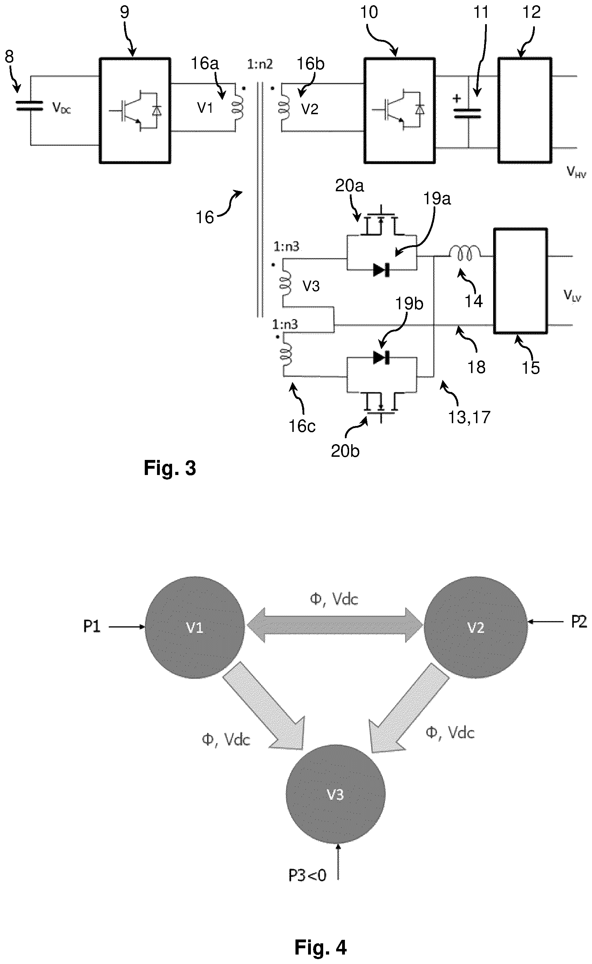

The power conversion topology 7 contains three terminals and is connected to the HV-battery 4, to the LV-battery 5, and to the PFC converter 3 via the GR-capacitor 8. In other words, the power conversion topology 7 electrically interconnects the PFC converter 3, the HV-battery 4 and the LV-battery 5 of the electric vehicle 1. The structure of the power conversion topology 7 according to the invention is explained in more detail below with reference to Fig. 2 and Fig. 3.

A DC voltage V_DC is applied to the GR-capacitor 8 of the power conversion topology 7. The DC voltage V_DC is provided by the PFC converter 3 and may be controlled by the PFC converter 3 of the electric vehicle 1. In addition, a voltage V_HC is applied to the HV-battery 4 and a voltage V_LV-is applied to the LV-battery.

Fig. 2 shows a simplified circuit diagram of the power conversion topology 7 according to the invention. Here, the power topology 7 comprises the GR-capacitor 8 and a GR-rectifier 9 on the GR-side; an HV-rectifier 10, an HV-capacitor 11 and an HV-filter 12 on the HV-side; and an LV-rectifier 13, an auxiliary inductor 14 and an LV-filter 15 on the LV-side. The HV-filter 12 and LV-filter 15 are realized in a manner known to those skilled in the art. The GR-rectifier 9 and the HV-rectifier 10 may each be represented by an active full-bridge rectifier.

In addition, the power topology 7 comprises a three-winding transformer 16 having a primary winding 16a, a secondary winding 16b, and a tertiary winding 16c. The secondary winding 16b has a turns number n2 and the tertiary winding 16c has a turns number n3. Here, a turns number of the primary winding 16a is a reference turns number and is set equal to one. However, it is understood that the turns number of the primary winding 16a may be arbitrary.

A fist AC voltage V1 is applied to the primary winding 16a, a second AC voltage V2 is applied to the secondary winding 16b and a third AC voltage V3 is applied to the tertiary winding 16c. A first active power P1 can be delivered to the primary winding 16a, a second active power P2 can be delivered to the secondary winding 16b, and a third active power P3 can be delivered to the tertiary winding 16c. In addition, the firs AC voltage V1 and the second AC voltage V2 can have a phase angle phi with respect to each other i.e. can be phase-shifted with respect to each other by the phase angle phi. The relationship between the variables defined here is explained in more detail below with reference to Fig. 4 to Fig. 6.

The GR-rectifier 9 is connected between the GR-capacitor 8 and the primary winding 16a in parallel with them. The HV-rectifier 10, the HV-capacitor 11 and the HV-filter 12 are connected between the secondary winding 16b and the HV-battery 4 of the electric vehicle 1 in parallel with them and with each other. Here, the HV-capacitor 11 is connected downstream of the HV-rectifier 10 and the HV-filter 12 is connected downstream of the HV-capacitor 11. The LV-rectifier 13, the auxiliary inductor 14 and the LV-filter 15 are connected between the tertiary winding 16c and the LV-battery 5 of the electric vehicle. In this case, the LV-rectifier 13 and the LV-filter 15 are connected in parallel and the auxiliary inductor 14 is connected in series to the tertiary winding 16c and to the LV-battery 5. The auxiliary inductor 14 is thereby connected downstream of the LV-rectifier 13 and the LV-filter 15 is connected downstream of the auxiliary inductor 14.

The power conversion topology 7 is bidirectional in design and is operable in a CHARGE mode and/or in a DRIVE mode and/or in a V-TO-G mode. In the CHARGE mode, the power conversion topology 7 is connected to the utility grid 2 and the HV-battery 4 and the LV-battery 5 of the electric vehicle 1 are charged by the utility grid 2 via the power conversion topology 7. In the DRIVE mode, the power conversion topology 7 is disconnected from the utility grid 2 and the LV-battery 5 of the electric vehicle 1 is charged by the HV-battery 4 of the electric vehicle 1 via the power conversion topology 7. In the V-TO-G mode, the power conversion topology 7 is connected to the utility grid 2 and the utility grid 2 draws a current from the HV-battery 5 of the electric vehicle 1 via the power conversion topology 7.

Fig. 3 shows a circuit diagram of the power conversion topology 7 according to the invention. Here, the structure of the LV-rectifier 13 is shown in detail. The LV-rectifier 13 is a midpoint rectifier 17 with a center tap 18. Here, the tertiary winding 16c of the three-winding transformer 16 is divided into two partial windings by the center tap 18. The partial windings of the three-winding transformer 16 are identical to each other and each have a turns number n3. The midpoint rectifier 17 contains two diodes 19a and 19b and two active switches 20a and 20b connected in antiparallel with the diodes 19a and 19b. The LV-rectifier 13 i.e. the midpoint rectifier 17 is bidirectional.

Fig. 4 shows a view of energy flows in the power conversion topology 7 according to the invention. The active powers P1, P2, P3 already defined above depend on the phase angle phi and the DC voltage V_DC. The phase angle phi is defined by the phase shift between the first AC voltage V1 at the primary winding 16a and the second AC voltage V2 at the secondary winding 16b. The phase angle phi can vary between -90° and 90°. The respective active power P1, P2, P3 is defined as positive during supply and negative during output. If the power losses in the three-winding transformer 16 are neglected, the sum of the respective active powers P1, P2, P3 is always zero.

If the power conversion topology 7 is operated in the CHARGE mode or in the V-TO-G mode, the DC voltage V_DC can be controlled by the PFC converter 3 of the electric vehicle 1. In the DRIVE mode of the power conversion topology 7, the first active power P1 is zero and the DC voltage V_DC is accordingly not a controlled variable. In the DRIVE mode, the second active power P2 is negative and the third active power P3 is positive, where, neglecting the power losses in the three-winding transformer 16, the second and third active powers P2 and P3 are equal in magnitude.

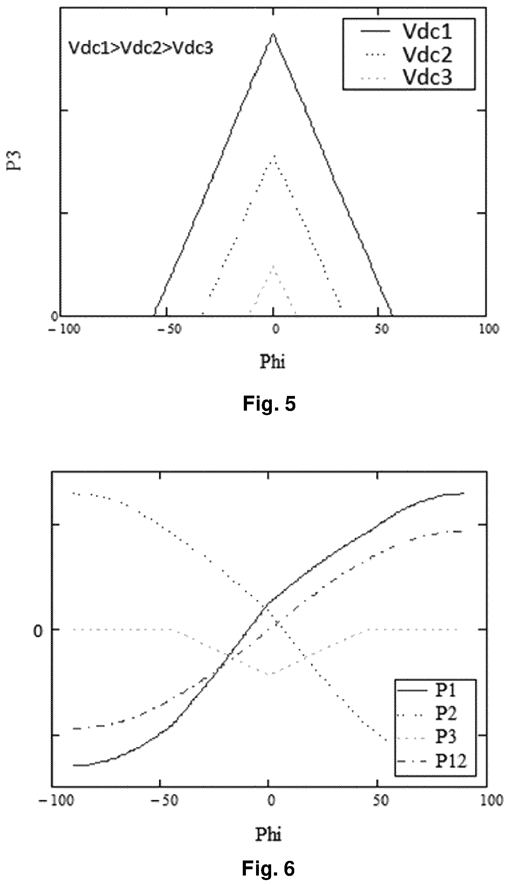

Fig. 5 shows a curve of the third active power P3 delivered on the LV-side in the DRIVE mode depending on the phase angle phi in the range between -90° and 90°. The curve of the third active power P3 is shown as a function of the level of the DC voltage V_DC-with different values V_DC1, V_DC2, V_DC3. The third active power P3 increases with the rising DC voltage V_DC and vice versa. At a low DC voltage V_DC, the third active power P3 is close to zero.

Fig. 6 shows a curve of the respective active powers P1, P2 and P3 depending on the phase angle phi in the range between -90° and 90°. Here, the dependence of the respective active powers P1, P2, P3 on the DC voltage V_DC and the phase angle phi can be seen particularly well. The respective active powers P1, P2, P3 are shown in the CHARGE mode. The active power P12 shown corresponds to an active power delivered from the HV-battery 4 to the LV-battery 5 in the DRIVE mode. In the DRIVE mode, the power conversion topology 7 functions as a conventional DAB (DAB: Dual Active Bridge).

## Claims

1. Power conversion topology (7) for charging a HV-battery (4) and/or a LV-battery (5) of an electric vehicle (1),
- wherein the power conversion topology (7) contains a three-winding transformer (16) comprising a primary winding (16a) for connection to a utility grid (2), a secondary winding (16b) for connection to an HV-battery (4), and a tertiary winding (16c) for connection to an LV-battery (5);
- wherein the power conversion topology (7) contains a GR-rectifier (9) connected upstream of the primary winding (16a), a HV-rectifier (10) connected downstream of the secondary winding (16b), and a LV-rectifier (13) connected downstream of the tertiary winding (16c).

2. Power conversion topology according to claim 1, **characterized in that** the power conversion topology (7) contains an auxiliary inductor (14) connected downstream of the LV-rectifier (13).

3. Power conversion topology according to claim 1 or 2,
**characterized in**
**that** the GR-rectifier (9) is represented by a full-bridge rectifier and/or the HV-rectifier (10) is represented by a full-bridge rectifier.

4. Power conversion topology according to any one of the preceding claims,
**characterized in**
**that** the power conversion topology (7) contains a GR-capacitor (8) connected upstream of the GR-rectifier (9).

5. Power conversion topology according to any one of the preceding claims,
**characterized in**
**that** the power conversion topology (7) contains a HV-capacitor (11) connected downstream of the HV-rectifier (10).

6. Power conversion topology according to any one of the preceding claims, **characterized in**
- **that** the power conversion topology (7) contains an HV-filter (11) connected downstream of the HV-rectifier (10), and/or
- **that** the power conversion topology (7) contains a LV-filter (15) connected downstream of the LV-rectifier (13).

7. Power conversion topology according to any one of the preceding claims, **characterized in**
- **that** an LV-side circuit arranged between the LV-battery (5) and the tertiary winding (16c) is bidirectional, and/or
- **that** the power conversion topology (7) is bidirectional.

8. Power conversion topology according to any one of the preceding claims, **characterized in**
- **that** the LV-rectifier (13) is represented by a full bridge rectifier, or
- **that** the LV-rectifier (13) is represented by a midpoint rectifier (17) with a center tap (18), wherein the tertiary winding (16c) being divided into two partial windings by the center tap (18), or
- **that** the LV-rectifier (13) is represented by a synchronous rectifier.

9. Power conversion topology according to claim 8,
**characterized in**
- **that** the LV-rectifier (13) is represented by the midpoint rectifier (17) with the center tap (18), wherein the midpoint rectifier (17) having two diodes (19a, 19b) and two active switches (20a, 20b) connected in antiparallel with the diodes (19a, 19b), or
- **that** the LV-rectifier (13) is represented by the synchronous rectifier, wherein the synchronous rectifier having MOSFET components and active switches connected in antiparallel with the MOSFET components.

10. Power conversion topology according to any one of the preceding claims,
**characterized in**
**that** an energy flow of the three-winding transformer (16) is controllable by a phase angle (phi) between a first AC voltage (V1) at the primary winding (16a) and a second AC voltage (V2) at the secondary winding (16b) and by a DC voltage (V_DC) provided by the utility grid (2).

11. Power conversion topology according to any one of the preceding claims, **characterized in**
- **that** the power conversion topology (7) can be operated in a CHARGE mode, wherein in the CHARGE mode, the power conversion topology (7) is connected to the utility grid (2) and the HV-battery (4) and the LV-battery (5) of the electric vehicle (1) are charged by the utility grid (2) via the power conversion topology (7);
- **that** the power conversion topology (7) can be operated in a DRIVE mode, wherein in the DRIVE mode, the power conversion topology (7) is disconnected from the utility grid (2) and the LV-battery (5) of the electric vehicle (1) is charged by the HV-battery (4) of the electric vehicle (1) via the power conversion topology (7);
- **that** the power conversion topology (7) can be operated in a V-TO-G mode, wherein in the V-TO-G mode, the power conversion topology (7) is connected to the utility grid (2) and the utility grid (2) draws a current from the HV-battery (5) of the electric vehicle (1) via the power conversion topology (7).
